# EUROPÄISCHE PATENTSCHRIFT

(11) **EP 1 110 273 B1**
(45) Veröffentlichungstag und Bekanntmachung des Hinweises auf die Patenterteilung: **13.11.2002**
(21) Anmeldenummer: 99931048.5
(22) Anmeldetag: 10.06.1999
(51) Int. Cl.: H01Q 1/32, H01Q 1/12, H01Q 19/10, H01Q 9/30, H01Q 9/42, H01Q 9/44, H01Q 1/44, H01Q 1/06

(54) **MOBILFUNKANTENNE**
MOBILE TRANSMISSION ANTENNA
ANTENNE RADIOTELEPHONIQUE MOBILE

(30) Priorität: 09.09.1998 DE 19841187
(43) Veröffentlichungstag der Anmeldung: 27.06.2001
(73) Patentinhaber: Hirschmann Electronics GmbH & Co. KG, 72654 Neckartenzlingen (DE)
(72) Erfinder: WENDT, Dirk, D-72555 Metzingen (DE); PFLETSCHINGER, Markus, D-72800 Eningen (DE)
(74) Vertreter: Stadler, Heinz, Dipl.-Ing.
(86) Internationale Anmeldenummer: EP9903984
(87) Internationale Veröffentlichungsnummer: WO00014824

(56) Entgegenhaltungen:
- EP-A- 0 559 546
- WO-A-99/21247
- DE-A- 4 220 654
- DE-A- 19 616 974
- FR-A- 2 553 584
- FR-A- 2 742 584

## Beschreibung

Die Erfindung betrifft eine wenigstens einen Monopol aufweisende Mobilfunkantenne für Fahrzeuge.
Derartige, zum Empfang und Senden von Hochfrequenzsignalen vorzugsweise im Frequenzbereich zwischen 0,8 und 1,9 GHz vorgesehene Mobilfunkantennen sind, beispielsweise als Autotelefonantenne, in verschiedenen Ausführungen als Stab- oder integrierte Antennen aus der Praxis bekannt.

Stabstrahler, wie sie insbesondere als λ/4-lange oder kurze dicke Monopole ("Stummelantennen") auf dem Fahrzeugdach aber auch als sogenannte "On-Glass"-Antennen zum Aufkleben auf Fahrzeugscheiben, etwa der Heckscheibe, verwendet werden, geben nicht nur einen in der Regel unerwünschten Hinweis auf die Ausstattung des Fahrzeugs mit einem Mobiltelefon, sondern sind als Anbauteile auch Manipulationen zugänglich. Diese Strahler sind zur Vermeidung von Beschädigungen in Waschanlagen zumeist abschraubbar ausgeführt und damit in besonderem Maße diebstahlgefährdet.

Bei "On-Glass"-Antennen erfolgt darüber hinaus aufgrund der Erzeugung unerwünschter horizontal polarisierter Feldkomponenten durch das Anschlußkabel im Sendebetrieb eine bei üblichen Sendeleistungen von bis zu acht Watt häufig nicht vertretbare Einstrahlung eines elektromagnetischen Feldes in den Fahrzeug-Innenraum. Dieser Nachteil besteht auch bei in Fahrzeug-Scheiben integrierten Mobilfunkantennen, bei denen die Antennenstruktur entweder auf der Scheibe aufgebracht oder bei Verbundglasscheiben zwischen den beiden Einzelscheiben angeordnet ist.

Bei "On-Glass"-Antennen ist darüber hinaus häufig das erforderliche elektrische Gegengewicht nicht sichergestellt, insbesondere, wenn die Masseanbindung nur über das Kabel ohne eine zusätzliche Massefläche erfolgt.

Integrierte Mobilfunkantennen für nicht leitende Karosserieteile sind nicht nur als Scheibenantennen bekannt, sondern auch bei Kunststoff-Stoßfängern. Ihr Einsatz setzt jedoch eine angepaßte Ausformung des Stoßfängers voraus, die nicht bei jedem Fahrzeug gegeben ist. Zur wenigstens näherungsweisen Erzeugung eines bei Mobilantennen stets angestrebten Rundstrahldiagramms sind außerdem zwei an den seitlichen Ecken des Stoßfängers angeordnete Antennensonden erforderlich.
Schließlich ist bei dieser Ausführung die Mobilfunkantenne nicht nur wegen der geringen Höhe des Montageortes, sondern auch aufgrund der exponierten unfallgefährdeten Lage nicht optimal.

Aufgabe der Erfindung ist es daher, eine Mobilfunkantenne der eingangs genannten Art zu schaffen, bei der auf möglichst einfache und kostengünstige Weise die schädliche Einstrahlung in den Fahrzeug-Innenraum bei Sendebetrieb minimiert und zugleich die Manipulations-und Diebstahlsgefahr verringert ist.

Diese Aufgabe ist durch die kennzeichnenden Merkmale des Anspruches 1 gelöst. Mit Hilfe des Reflektors ist mit geringem Aufwand eine Richtwirkung erzeugt, wobei aufgrund der angegebenen Anordnung die Hauptkeule des Richtdiagramms vom Fahrzeug wegweist. Dadurch ist eine Einstrahlung in das Fahrzeuginnere im wesentlichen nur noch über die rückwärtigen Nebenzipfel dieses Richtdiagramms möglich und somit stark reduziert. Richtung und Größe (Dämpfung) dieser Nebenzipfel sind darüber hinaus durch entsprechende Konfiguration und Anordnung des Reflektors relativ zum Monopol den räumlichen Gegebenheiten des Fahrzeugs einfach anpaßbar.
Bei der bevorzugten Montage im Fahrgastraum weist die Mobilfunkantenne auch eine für die gewünschte effektiv empfangene bzw. abgestrahlte Leistung ausreichende Höhe über dem Boden auf.

Vorteilhafte Ausführungen und Weiterbildungen der Mobilfunkantenne gemäß Anspruch 1 sind in den Unteransprüchen beschrieben.

So ist es zugleich für die Montage sowie die Bereitstellung und Lagerhaltung besonders günstig, den Monopol und Reflektor nicht als Einzelteile, sondern nach Anspruch 2 als bauliche Einheit herzustellen.

Wird diese Einheit gemäß Anspruch 3 in der Nähe der Fahrzeug-Dachkante angeordnet, so ergibt sich bei Fahrzeugen mit metallischem Dach durch dessen Anregung für die tatsächliche Abstrahlung der Signalenergie bzw, deren Empfang insgesamt nahezu eine erwünschte Rundstrahl-Charakteristik.

Der Reflektor kann je nach den Erfordernissen des Einzelfalls unterschiedlich ausgebildet sein. Im einfachsten Fall besteht er aus einer ebenen leitenden Fläche, deren Größe sich im wesentlichen nach dem Betriebsfrequenzbereich richtet (Anspruch 4). Mit einer gewölbten Ausbildung des Reflektors gemäß Anspruch 5 ist demgegenüber auf einfache, wenn auch etwas teurere Weise eine höhere Nebenzipfeldämpfung und eine kompaktere Bauweise möglich. Eine Wölbung ist dabei nur in der horizontalen Ebene erforderlich, weil die Nutzsignale in den Mobilfunkbändern ausschließlich vertikal polarisiert sind.

Eine besonders vorteilhafte Ausführung einer solchen Mobilfunkantenne ist in Anspruch 6 angegeben. Sie zeichnet sich durch einen sehr kompakten und mechanisch stabilen Aufbau mit durch die Seitenwände noch höherer Schirmwirkung gegen Einstrahlung von Sendeenergie in den Fahrzeuginnenraum aus. Dabei stellt die Rückwand den eigentlichen Reflektor dar. Der stabförmige Monopol weist, damit er einerseits die Soll-Länge von etwa λ/4 erreicht und zum andern innerhalb des schaufeiförmigen Teils Platz hat, nicht nur vertikale Anteile auf, sondern auch horizontale. Die durch letztere erzeugte unerwünschte Horizontalkomponente des elektromagnetischen Feldes wird durch den Boden und die Seitenwände minimiert.
Die Wellenbildung erfolgt zwischen Monopol und Boden, wobei letzterer das Gegengewicht der Antenne bildet. Der Antennenanschluß liegt auf der Rückseite bzw. der Unterseite des Bodens und ist z.B. als koaxialer Gerätestecker ausgebildet, an den eine koaxiale Verbindungsleitung zum Sender bzw. Empfänger anschließbar ist.

Für den in der Praxis wohl häufigsten Einsatzfall, nämlich der Montage an den schrägen Flächen der Heck- oder Frontscheibe von Kraftfahrzeugen, gewährleistet eine keilförmige Ausbildung der Antenne gemäß Anspruch 7, daß die Schräge der Montagefläche ausgeglichen und die vertikalen Monopolteile auch nach der Montage vertikal ausgerichtet sind, so daß das Antennendiagramm die Soll-Ausrichtung aufweist.

Eine Verbesserung der Strahlungseigenschaften der erfindungsgemäßen Mobilfunkantenne ist nach Anspruch 8 durch die Vermeidung scharfer Kanten an den Übergängen der einzelnen Flächen und damit von unerwünschten, Störwellen erzeugenden parasitären Effekten erzielt.

Ein weiterer wesentlicher Vorteil besteht darin, den Raum zwischen Monopol und Reflektor bzw. - bei einer Ausführung gemäß Anspruch 6 - den von dem schaufelförmigen Teil umschlossenen Raum mit Dielektrikum auszufüllen (Anspruch 9). Damit ist eine wesentliche Verkleinerung der Antenne und somit auch der Sichtbehinderung bei Scheibenmontage erreichbar. Durch entsprechende Wahl der Dielektrizitätskonstanten ist die Antenne zudem auf einfache Weise den Bedürfnissen bzw. räumlichen Gegebenheiten des Einzelfalls anpaßbar.
Außerdem ist damit ein mechanisch äußerst robuster Aufbau gegeben, wobei zudem der Monopol lagestabil und geschützt eingebettet ist.
Gemäß einer weiteren vorteilhaften Ausführung der erfindungsgemäßen Mobilfunkantenne ist der Monopol entlang der Öffnungsfläche des schaufelförmigen Teils, also im Querschnitt entlang der Hypothenuse dieses Teils angordnet, so daß er in diesem längsten Bereich des Keils mit Sicherheit auch bei den tiefsten Frequenzen des Betriebsfrequenzbereichs die Soll-Länge von etwa λ/4 erreicht.

Anstelle eines geraden Stabstrahlers kann gemäß Anspruch 11 auch eine geknickte Ausbildung des Monopols gewählt werden, mit dem Vorteil, daß die Antennen-Anschlußstelle im Boden in Grenzen frei wählbar und damit den räumlichen Gegebenheiten unterschiedlicher Fahrzeuge entsprechend festlegbar ist.

In den Ansprüchen 12 bis 16 sind verschiedene vorteilhafte Alternativen für die Befestigung der Mobilfunkantenne angegeben. Sie kann entweder dauerhaft sein (z.B. durch Festkleben) oder lösbar, etwa durch Schraubbefestigung der Antenne.
Besonders vorteilhaft ist es, die Antenne gemäß Anspruch 17 in eine fest angeordnete, bereits für andere Zwecke vorgesehene Einrichtung, vorzugsweise in eine am oberen Rand der Fahrzeug-Heckscheibe angebrachte dritte Bremsleuchte, zu integrieren (Anspruch 18). Denn die Antenne benötigt hierbei weder einen zusätzlichen Platzbedarf noch besondere Haltemittel. Außerdem ist dabei der Verkabelungsaufwand verringert, wodurch die Herstellkosten gesenkt sind.

Bei undurchsichtigem Dielektrikum sind, damit sowohl die Mobilfunkantenne als auch die dritte Bremsleuchte ihre Funktion erfüllen können, die beiden Geräte in dem gemeinsamen Gehäuse nebeneinander zu positionieren, wodurch dieses verhältnismäßig breit sein muß und die Sicht durch die Heckscheibe etwas beeinträchtigen kann. Besonders vorteilhaft ist es daher, gemäß Anspruch 19 für das Dielektrikum lichtdurchlässiges Material, also beispielsweise Glas oder durchsichtigen Kunststoff, vorzusehen und zugleich die Rückwand des schaufelförmigen Teils so auszuführen, daß sie einerseits für das Licht der Bremsleuchte ausreichend transparent und andererseits noch als Antennenreflektor im genannten Mobilfunk-Frequenzbereich wirksam ist, wozu sich der angegebene gitterartige Aufbau der Rückwand besonders eignet.

Durch diese Ausführung ist es möglich, die Mobilfunkantenne vor der Glühlampe der dritten Bremsleuchte anzuordnen, wodurch das Gesamtgerät lediglich die Breite des Gehäuses der dritten Bremsleuchte aufweist und die Antenne somit keine zusätzliche Sichtbehinderung bewirkt.
Überdies ist somit auch bei genauerem Hinsehen keine Mobilfunkantenne erkennbar und insoweit auch kein Hinweis auf das Vorhandensein eines Mobiltelefons gegeben. Schließlich ist aufgrund der Anordnung am oberen Scheibenrand insgesamt in erwünschter Weise etwa eine Rundstrahl-Charakteristik des Antennendiagramms erreichbar und damit ein weitgehend fahrtrichtungsunabhängiger Empfang bzw. eine derartige Abstrahlung gewährleistet. Die Richtcharakteristik der Antenne selbst verhindert dabei im Sendefall eine unzulässige Einstrahlung von Hochfrequenz-Energie in den Fahrgastraum.

Der Reflektor, sowie im Falle eines Aufbaus gemäß Anspruch 6 auch der Boden und die Seitenwände, können aus Metall (z.B. aus Blech) bestehen. Kostengünstiger und in beliebiger Ausformung einfacher in der Herstellung ist jedoch eine Ausführung aus metallisiertem Kunststoff (Anspruch 20).

Sofern die Mobilfunkantenne ein schaufelförmiges Teil nach Anspruch 6 aufweist, ist eine besonders kostensparende Fertigung mit minimalen Aufwand dadurch erreichbar, daß gemäß Anspruch 21 einfach das Dielektrikum mit einem Metallbelag versehen wird.

Eine weitere vorteilhafte Ausbildung einer nach Anspruch 6 aufgebauten Mobilfunkantenne ist in Anspruch 22 beschrieben. Durch die Möglichkeit, den Antennen-Anschlußpunkt mittels einer kostengünstigen Koplanarleitung an eine beliebige, in Bezug auf die räumlichen Gegebenheiten jedes Anwendungsfalls passende Stelle des Bodens zu übertragen, kann die Anordnung des Monopols innerhalb des schaufelförmigen Teils optimal hinsichtlich des gewünschten Strahlungsdiagramms und der Anpassung erfolgen.
Damit ist es außerdem möglich, die Antenne ohne Änderung an unterschiedlichen Einsatzorten im Fahrzeuginneren zu verwenden.

Zur Optimierung des Strahlungsdiagramms der Mobilfunkantenne sowie deren Eingangsimpedanz werden in an sich bekannter Weise der Speisepunkt sowie die Form und Länge des Monopols entsprechend gewählt und gegebenenfalls wird am freien Ende des Monopols eine Dachkapazität angebracht.
Eine weitere vorteilhafte Möglichkeit, insbesondere die Winkellage und Dämpfung der Nebenzipfel unabhängig von den genannten Einflußgrößen zu optimieren, ist in Anspruch 23 angegeben. Allerdings ist diese Ausgestaltung der erfindungsgemäßen Mobilfunkantenne mit verhältnismäßig großem Aufwand in Entwicklung und Herstellung verbunden.

Nachfolgend ist die Erfindung anhand eines Ausführungsbeispiels mit in der dritten Bremsleuchte eines Kraftfahrzeugs integrierter Mobilfunkantenne in den Figuren weiter erläutert. Es zeigen:

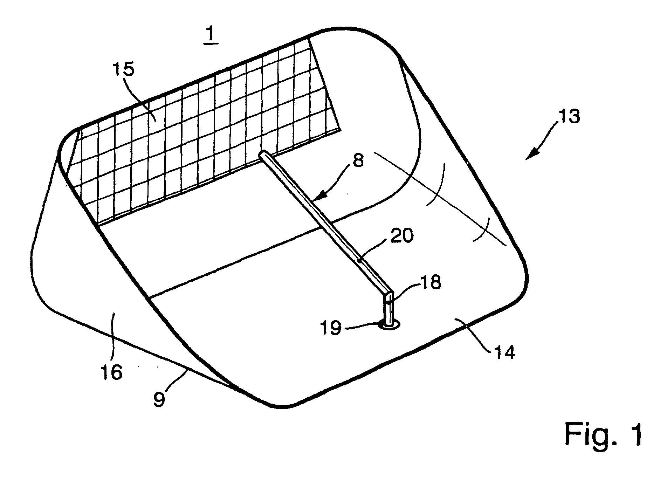

- Fig. 1 -: eine perspektivische Ansicht des Antennenteils,

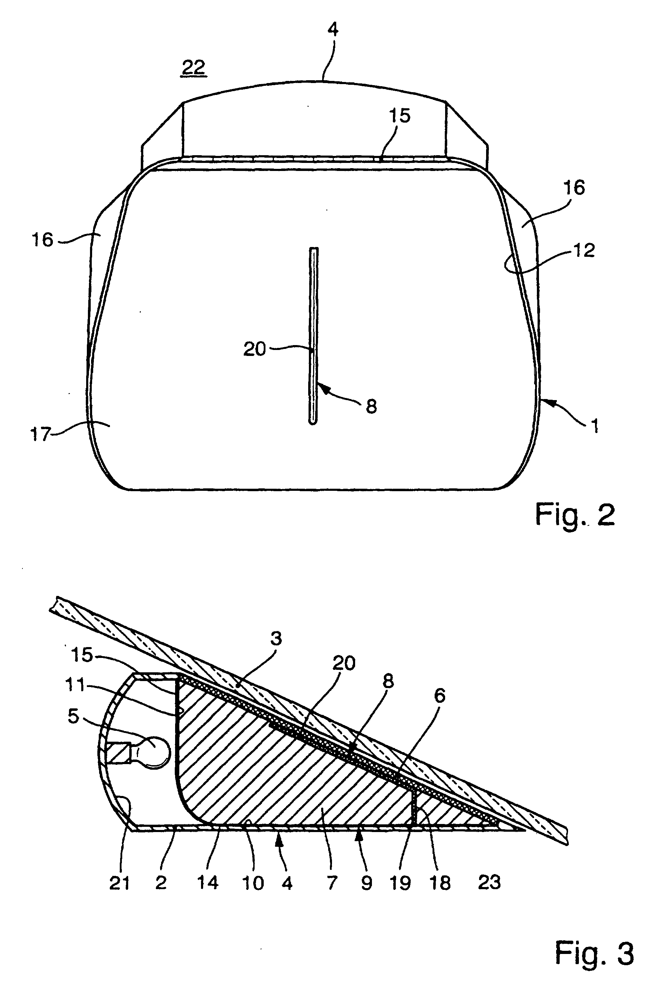

- Fig. 2 -: eine Prinzipdarstellung der Bremsleuchte mit integrierter Antenne in Draufsicht und
- Fig. 3 -: ein Schnitt durch den Prinzipaufbau dieser Einheit und deren Anordnung an einer Fahrzeug-Heckscheibe.

Die Mobilfunkantenne 1 ist im Gehäuse 2 einer am oberen Rand einer Kfz-Heckscheibe 3 mit nicht dargestellten Haltemitteln befestigten dritten Bremsleuchte 4 angeordnet, die eine Glühlampe 5 und eine im der Heckscheibe 3 zugewandten Bereich des Gehäuses 2 durchsichtig rote Signalscheibe 6 aufweist.

Die Mobilfunkantenne 1 besteht aus einem lichtdurchlässigen dielektrischen Keil 7, einem darin eingegossenen Monopol 8 und einem auf den dielektrischen Keil 7 aufgebrachten Metlalbelag 9. Die Dielektrizitätskonstante des Keils 7 ermöglicht eine derart geringe Größe der Antenne, daß sie zusätzlich in das herkömmliche Gehäuse einer dritten Bremsleuchte paßt.
Der dielektrische Keil 7 weist eine Bodenfläche 10, eine davon senkrecht abragende Rückfläche 11 sowie zwei etwa dreieckförmige Seitenflächen 12 auf. Diese Flächen 10 bis 12 sind mit dem Metallbelag 9 versehen, der damit ein schaufelartiges Metallteil 13 mit einem Boden 14, einer Rückwand 15 und zwei Seitenwänden 16 bildet Der Metallbelag bedeckt dabei die Bodenfläche 10 und die Seitenflächen 12 des dielektrischen Keils 7 vollständig, während die Rückwand 15 gitterförmig ausgebildet ist. Die der Öffnungsfläche des Metallteils 13 entsprechende, nicht beschichtete Fläche 17 des dielektrischen Keils 7 liegt direkt an der Innenseite der Signalscheibe 6 an.
Die aneinanderstoßenden Kanten der Flächen 10 bis 12 des dielektrischen Keils 7 und damit auch des schaufelartigen Metallteils 13 sind kantenlos rund ausgebildet.

Der Monopol 8 ist abgewinkelt ausgeführt, wobei ein kürzerer Schenkel 18 anschlußseitig eine Öffnung 19 des Bodens 14 durchsetzt sowie zu einem nicht dargestellten Koaxialanschluß führt und ein längerer Schenkel 20 sich entlang der Öffnungsfläche 17 des schaufelförmigen Metallteils 13 bzw. der Innenfläche der Signalscheibe 6 verläuft.

Die Glühlampe 5 der dritten Bremsleuchte 4 ist etwa im Brennpunkt einer parabolförmigen reflektierenden Wand 21 des Gehäuses 2 hinter der gitterformigen Rückwand 15 des schaufelförmigen Metallteils 13 angeordnet.

Durch den beschrieben Aufbau ist das Kombinationsgerät 22 zugleich als Bremsleuchte 4 und als Mobilfunktantenne 1 wirksam.
Das Licht der Glühlampe 5 ist durch die reflektierende Wand 21 in voller Stärke auf die Signalscheibe 6 gebündelt, wobei durch die Gitterstruktur der Rückwand 15 des schaufeiförmigen Metallteils 13 und die Verwendung eines lichtdurchlässigen Dielektrikums 7 lediglich eine so geringe Dämpfung auftritt, daß die Leuchtstärke der Bremsleuchte praktisch die gleiche ist wie ohne integrierte Antenne.

Die Gitterstruktur der Rückwand 15 ist bezüglich der gegenseitigen Abstände der Gitterleiter oder - anders ausgedrückt - der Größe der Zwischenräume so bemessen, daß sie zwar das Licht der Glühlampe 5 praktisch in voller Stärke durchläßt, andererseits aber in dem genannten Mobilfunk-Betriebsfrequenzbereich als Reflektor wirksam ist. Der Boden 14 stellt in der bereits beschriebenen Weise das elektrische Gegengewicht für den Monopol 8 dar und bewirkt zusammen mit den Seitenwänden 15 eine Minimierung der unerwünschten Horizontalkomponenten des elektromagnetischen Feldes.

Bei diesem Kombinationsgerät 22 ist nicht erkennbar, daß es eine Mobilfunkantenne enthält. Außerdem sind Manipulationen von außen unmöglich und die Mobilfunkantenne ist lagestabil und sowohl gegen mechanische (Rüttelbewegungen) als auch Witterungseinflüße optimal geschützt.
Aufgrund der Abschirmung durch das schaufelartige Metallteil 13 bzw. das damit erzeugte Richtdiagramm dringt darüber hinaus lediglich ein unschädlich geringer Teil der Sendeenergie in den Fahrzeug-Innenraum 23 ein.
Weiterhin sind durch den kantenlosen Aufbau des Metalteils 13 parasitäre Störeffekte vermieden, die das Strahlungsdiagramm ungünstig beeinflussen könnten. Schließlich ist durch die Integration der Antenne 1 in das Gehäüse 2 der Bremsleuchte 4 weder ein eigenes Gehäuse noch eine Befestigungseinrichtung für die Antenne erforderlich.

## Patentansprüche

1. Im Fahrgastraum (23) an oder in der Nähe von für elektromagnetische Wellen durchlässigen Fahrzeugteilen, insbesondere Fensterscheiben (3), angebrachte Mobilfunkantenne (1) mit wenigstens einem Monopol (8),
**dadurch gekennzeichnet, dass** dem wenigstens einen Monopol (8) eine nicht durch Karosserieteile gebildete Massebezugsfläche (14) sowie ein Reflektor (15) zugeordnet ist, der vom Monopol (8) aus gesehen in Richtung zum Fahrgastraum (23) hin positioniert ist.

2. Mobilfunkantenne nach Anspruch 1, **dadurch gekennzeichnet, daß** Monopol (8) und Reflektor (15) eine bauliche Einheit bilden.

3. Mobilfunkantenne nach Anspruch 2, **dadurch gekennzeichnet, daß** sie in der Nähe der Fahrzeug-Dachkante angeordnet ist.

4. Mobilfunkantenne nach einem der Ansprüche 1 bis 3, **dadurch gekennzeichnet, daß** der Reflektor eben ist.

5. Mobilfunkantenne nach einem der Ansprüche 1 bis 3, **dadurch gekennzeichnet, daß** der Reflektor (15) in der horizontalen Ebene wenigstens teilweise gewölbt und in Abstrahlrichtung offen ist.

6. Mobilfunkantenne nach Anspruch 5, **dadurch gekennzeichnet, daß** ein schaufelförmiges Teil (13) aus leitendem Material vorgesehen ist, das aus einem Boden (14) sowie, davon im wesentlichen senkrecht abragend, einer den Reflektor bildenden Rückwand (15) und zwei Seitenwänden (16) besteht, und daß der Monopol (8) anschlußseitig eine Ausnehmung (19) des Bodens (14) durchsetzt und innerhalb des schaufelförmigen Teils (13) angeordnet ist.

7. Mobilfunkantenne nach Anspruch 6, **dadurch gekennzeichnet, daß** die Seitenwände (16) im wesentlichen dreieckförmig ausgebildet sind und das schaufelförmige Teil (13) dadurch eine Keilform aufweist, deren der Rückwand (15) gegenüberliegender Winkel demjenigen entspricht, den die Montagefläche (3) gegenüber der Senkrechten aufweist.

8. Mobilfunkantenne nach einem der Ansprüche 4 bis 7, **dadurch gekennzeichnet, daß** die aneinander stoßenden Bereiche von Boden (14), Rückwand (15) und Seitenwänden (16) kantenlos rund ineinander übergehen.

9. Mobilfunkantenne nach einem der Ansprüche 1 bis 8, **dadurch gekennzeichnet, daß** zwischen Reflektor (15) und Monopol (8) ein diesen vorzugsweise mit umfassendes Dielektrikum (7) vorgesehen ist.

10. Mobilfunkantenne nach einem der Ansprüche 6 bis 9, **dadurch gekennzeichnet, daß** der Monopol (8) zumindest auf einem Teil seiner Länge parallel zu der oder direkt angrenzend an die durch den Rand des schaufelförmigen Teils (13) gebildete Öffnungsfläche(17) verläuft.

11. Mobilfunkantenne nach Anspruch 10, **dadurch gekennzeichnet, daß** der Monopol (8) zwei ungleich lange, gegeneinander abgewinkelte Schenkel (18, 20) aufweist, deren einer anschlußseitig senkrecht zum Boden (14) angeordnet ist.

12. Mobilfunkantenne nach einem der Ansprüche 2 bis 11, **dadurch gekennzeichnet, daß** die Antenne direkt an dem für die Montage bestimmten Fahrzeugteil befestigt ist.

13. Mobilfunkantenne nach Anspruch 12, **dadurch gekennzeichnet, daß** der Reflektor bzw. das schaufelförmige Teil Randteile zum Festkleben auf dem Fahrzeugteil aufweisen.

14. Mobilfunkantenne nach Anspruch 12, **dadurch gekennzeichnet, daß** das gegebenenfalls vorhandene Dielektrikum auf dem Fahrzeugteil festgeklebt ist.

15. Mobilfunkantenne nach einem der Ansprüche 1 bis 14, **dadurch gekennzeichnet, daß** eine Haltevorrichtung zur Befestigung der Antenne an dem für die Montage bestimmten Fahrzeugteil vorgesehen ist.

16. Mobilfunkantenne nach Anspruch 15, **dadurch gekennzeichnet, daß** die Haltevorrichtung Teil des Reflektors bzw. des schaufelförmigen Teils ist.

17. Mobilfunkantenne nach Anspruch 15, **dadurch gekennzeichnet, daß** die Antenne (1) in eine fest angeordnete nicht zur Antenne gehörige Einrichtung (4) integriert ist.

18. Mobilfunkantenne nach Anspruch 17, **dadurch gekennzeichnet, daß** als Einrichtung die dritte Bremsleuchte (4) des Fahrzeugs vorgesehen ist.

19. Mobilfunkantenne nach einem der Ansprüche 8 bis 18, **dadurch gekennzeichnet, daß** das Dielektrikum (7) aus lichtdurchlässigem Material besteht und die Rückwand (15) gitterartig aufgebaut ist.

20. Mobilfunkantenne nach einem der Ansprüche 1 bis 19, **dadurch gekennzeichnet, daß** der Reflektor (15) sowie gegebenenfalls der Boden (14) und die Seitenwände (16) aus metallisiertem Kunststoff bestehen.

21. Mobilfunkantenne nach einem der Ansprüche 9 bis 20, **dadurch gekennzeichnet, daß** das schaufelförmige Teil (13) durch metallisierte Flächen des Dielektrikums (7) gebildet ist

22. Mobilfunkantenne nach einem der Ansprüche 6 bis 21, **dadurch gekennzeichnet, daß** der Boden als doppelt kaschierte Platine ausgebildet ist, wobei die eine vollständig mit Metallbelag beschichtete Platinenfläche dem Monopol zugewandt ist und die andere Platinenfläche eine Streifenleitungs-Koplanarleitung aufweist, die den Anschlußpunkt des Monopols mit einer innerhalb dieser Platinenfläche frei wählbaren Antennenanschlußstelle verbindet.

23. Mobilfunkantenne nach einem der Ansprüche 1 bis 22, **dadurch gekennzeichnet, daß** mit dem Reflektor bzw. dem schaufelförmigen Teil leitend verbunden Parasitärstrahler zur Optimierung der Strahlungscharakteristik vorgesehen sind.

## Claims

1. Mobile transmission antenna (1) which is affixed in the passenger compartment (23) to or in proximity of parts of the vehicle, in particular window panes (3), which parts of the vehicle allow the passage of electromagnetic waves, said mobile transmission antenna having at least one monopole (8), **characterised in that** the at least one monopole (8) is allocated a mass reference surface (14), which is not formed by bodywork parts, and a reflector (15) which as seen from the monopole (8) is positioned in the direction towards the passenger compartment (23).

2. Mobile transmission antenna as claimed in claim 1, **characterised in that** the monopole (8) and the reflector (15) form a structural unit.

3. Mobile transmission antenna as claimed in claim 2, **characterised in that** it is disposed in proximity of the edge of the vehicle roof.

4. Mobile transmission antenna as claimed in any one of claims 1 to 3, **characterised in that** the reflector is planar.

5. Mobile transmission antenna as claimed in any one of claims 1 to 3, **characterised in that** the reflector (15) is at least partially curved in the horizontal plane and is open in the radiation direction.

6. Mobile transmission antenna as claimed in claim 5, **characterised in that** a scoop-like part (13) made of conductive material is provided which consists of a base (14) and, protruding substantially perpendicularly therefrom, a rear wall (15), which forms the reflector, and two sidewalls (16), and that on the connection-side the monopole (8) passes through a cut-out (19) in the base (14) and is disposed inside the scoop-like part (13).

7. Mobile transmission antenna as claimed in claim 6, **characterised in that** the sidewalls (16) are substantially triangular and the scoop-like part (13) consequently comprises a wedge shape, of which the angle lying opposite the rear wall (15) corresponds to the particular angle of the mounting surface (3) with respect to the perpendicular.

8. Mobile transmission antenna as claimed in any one of claims 4 to 7, **characterised in that** the abutting regions of the base (14), rear wall (15) and sidewalls (16) meet to form a rounded surface without edges.

9. Mobile transmission antenna as claimed in any one of claims 1 to 8, **characterised in that** between the reflector (15) and the monopole (8) there is provided a dielectric (7) which preferably also encompasses said monopole.

10. Mobile transmission antenna as claimed in any one of claims 6 to 9, **characterised in that** the monopole (8) extends at least over part of its length in parallel with or directly adjoining the opening surface (17) formed by the edge of the scoop-like part (13).

11. Mobile transmission antenna as claimed in claim 10, **characterised in that** the monopole (8) comprises two limbs (18, 20) of a different length which are bent at an angle with respect to each other and of which one is disposed on the connection-side perpendicular to the base (14).

12. Mobile transmission antenna as claimed in any one of claims 2 to 11, **characterised in that** the antenna is attached directly to the part of the vehicle designated for mounting purposes.

13. Mobile transmission antenna as claimed in claim 12, **characterised in that** the reflector and the scoop-like part respectively comprise edge parts for fixedly adhering them to the part of the vehicle.

14. Mobile transmission antenna as claimed in claim 12, **characterised in that** the optionally provided dielectric is fixedly adhered to the part of the vehicle.

15. Mobile transmission antenna as claimed in any one of claims 1 to 14, **characterised in that** a holding device is provided for attaching the antenna to the part of the vehicle designated for mounting purposes.

16. Mobile transmission antenna as claimed in claim 15, **characterised in that** the holding device is a part of the reflector or the scoop-like part.

17. Mobile transmission antenna as claimed in claim 15, **characterised in that** the antenna (1) is integrated into a fixedly disposed device (4) not associated with the antenna.

18. Mobile transmission antenna as claimed in claim 17, **characterised in that** the device is provided in the form of the third brake light (4) of the vehicle.

19. Mobile transmission antenna as claimed in any one of claims 8 to 18, **characterised in that** the dielectric (7) consists of transparent material and the rear wall (15) is constructed in the form of a lattice.

20. Mobile transmission antenna as claimed in any one of claims 1 to 19, **characterised in that** the reflector (15) and optionally the base (14) and the sidewalls (16) consist of metallized synthetic material.

21. Mobile transmission antenna as claimed in any one of claims 9 to 20, **characterised in that** the scoop-like part (13) is formed by metallized surfaces of the dielectric (7).

22. Mobile transmission antenna as claimed in any one of claims 6 to 21, **characterised in that** the base is formed as a double-clad plate, wherein one plate surface which is coated completely with a metal coating faces the monopole and the other plate surface comprises a strip line-coplanar line which connects the connection point of the monopole to an antenna connection point which can be freely selected within this plate surface.

23. Mobile transmission antenna as claimed in any one of claims 1 to 22, **characterised in that** in order to optimise the radiation pattern, parasitic elements are provided which are conductively connected to the reflector and the scoop-like part respectively.

## Revendications

1. Antenne radio mobile (1) placée dans l'habitacle (23) sur ou à proximité d'éléments d'un véhicule perméables aux ondes électromagnétiques, en particulier de vitres de fenêtres (3), comportant au moins un monopôle, **caractérisée en ce que**, à au moins un monopôle (8) est associée une masse de référence de masse (14) formée par des éléments de la carrosserie, ainsi qu'un réflecteur (15) qui, vu depuis le monopôle (8), est positionné en direction de l'habitacle (23).

2. Antenne radio mobile selon la revendication 1, **caractérisée en ce que** le monopôle (8) et le réflecteur (15) forment une unité de construction.

3. Antenne radio mobile selon la revendication 2, **caractérisée en ce qu'**elle est disposée à proximité du bord du toit du véhicule.

4. Antenne radio mobile selon l'une des revendications 1 à 3, **caractérisée en ce que** le réflecteur est plan.

5. Antenne radio mobile selon l'une des revendications 1 à 3, **caractérisée en ce que** le réflecteur (15) est bombé au moins partiellement dans le plan horizontal et est ouvert dans le sens d'émission.

6. Antenne radio mobile selon la revendication 5, **caractérisée en ce qu'**il est prévu un élément (13) en forme de pelle en un matériau conducteur, qui est constitué d'un fond (14) ainsi que d'une paroi arrière (15) formant le réflecteur, dépassant sensiblement perpendiculairement du fond, et de deux parois latérales (16), et **en ce que** le monopôle (8) traverse, côté raccordement, un évidement (19) du fond (14) et est disposé à l'intérieur de l'élément (19) en forme de pelle.

7. Antenne radio mobile selon la revendication 6, **caractérisée en ce que** les parois latérales (16) sont sensiblement triangulaires et l'élément (13) en forme de pelle présente de ce fait une forme en coin dont l'angle, opposé à la paroi arrière (15), correspond à celui que la surface de montage (34) présente par rapport aux verticales.

8. Antenne radio mobile selon l'une des revendications 4 à 7, **caractérisée en ce que** les zones jointives l'une à l'autre du fond (14), de la paroi arrière (15) et des parois latérales (16) se prolongent l'une l'autre de manière arrondie, sans arête.

9. Antenne radio mobile selon l'une des revendications 1 à 8, **caractérisée en ce qu'**un diélectrique (7) comprenant de préférence le monopôle (8) est prévu entre le réflecteur (15) et le monopôle (8).

10. Antenne radio mobile selon l'une des revendications 6 à 9, **caractérisée en ce que** le monopôle (8) s'étend au moins sur une partie de sa longueur, parallèlement ou de manière directement adjacente à la surface d'ouverture (17) formée par le bord de l'élément (13) en forme de pelle.

11. Antenne radio mobile selon la revendication 10, **caractérisée en ce que** le monopôle (8) comporte deux branches (18, 20) de longueurs différentes, coudées l'une par rapport à l'autre, dont une est disposée côté raccordement perpendiculairement au fond (14).

12. Antenne radio mobile selon l'une des revendications 2 à 11, **caractérisée en ce que** l'antenne est directement fixée à l'élément du véhicule destiné au montage.

13. Antenne radio mobile selon la revendication 12, **caractérisée en ce que** le réflecteur ou l'élément en forme de pelle présente des parties de bordure à coller sur l'élément du véhicule.

14. Antenne radio mobile selon la revendication 12, **caractérisée en ce que** le diélectrique éventuellement prévu est collé sur l'élément du véhicule.

15. Antenne radio mobile selon l'une des revendications 1 à 14, **caractérisée en ce qu'**un dispositif de maintien est prévu pour la fixation de l'antenne sur l'élément du véhicule destiné au montage.

16. Antenne radio mobile selon la revendication 15, **caractérisée en ce que** le dispositif de maintien fait partie du réflecteur ou de l'élément en forme de pelle.

17. Antenne radio mobile selon la revendication 15, **caractérisée en ce que** l'antenne (1) est intégrée dans un dispositif (4) disposé de manière fixe, ne faisant pas partie de l'antenne.

18. Antenne radio mobile selon la revendication 17, **caractérisée en ce qu'**on prévoit comme dispositif le troisième feu de stop (4) du véhicule.

19. Antenne radio mobile selon l'une des revendications 8 à 18, **caractérisée en ce que** le diélectrique (7) est constitué d'une matière translucide et la paroi arrière (15) est de construction en grille.

20. Antenne radio mobile selon l'une des revendications 1 à 19, **caractérisée en ce que** le réflecteur (15), ainsi qu'éventuellement le fond (14) et les parois latérales (16) sont en matière plastique métallisée.

21. Antenne radio mobile selon l'une des revendications 9 à 20, **caractérisée en ce que** l'élément (13) en forme de pelle est formé par des surfaces métallisées du diélectrique (7).

22. Antenne radio mobile selon l'une des revendications 6 à 21, **caractérisée en ce que** le fond est réalisé en tant que platine à double placage, une surface de la platine, entièrement recouverte d'une garniture métallique, étant tournée vers le monopôle, et l'autre surface de la platine présentant une ligne coplanaire à la ligne en ruban, qui relie le point de raccordement du monopôle à un emplacement de branchement d'antenne pouvant être choisi librement à l'intérieur de cette surface de la platine.

23. Antenne radio mobile selon l'une des revendications 1 à 22, **caractérisée en ce que** pour optimiser la caractéristique de rayonnement sont prévus des émetteurs de rayonnement parasitaires reliés de manière conductrice au réflecteur ou à l'élément en forme de pelle.
